# EUROPÄISCHE PATENTSCHRIFT

(11) **EP 2 524 488 B1**
(45) Veröffentlichungstag und Bekanntmachung des Hinweises auf die Patenterteilung: **05.03.2014**
(21) Anmeldenummer: 11700405.1
(22) Anmeldetag: 12.01.2011
(51) Int. Cl.: H04L 29/08, G05B 19/418, H04L 29/12

(54) **VERFAHREN ZUR BEDIENUNG, BEOBACHTUNG UND/ODER KONFIGURATION EINES AUTOMATISIERUNGSSYSTEMS EINER TECHNISCHEN ANLAGE**
METHOD FOR OPERATING, MONITORING AND/OR CONFIGURING AN AUTOMATION SYSTEM OF A TECHNICAL PLANT
PROCÉDÉ POUR COMMANDER, OBSERVER ET/OU CONFIGURER UN SYSTÈME D'AUTOMATISATION D'UNE INSTALLATION TECHNIQUE

(30) Priorität: 13.01.2010 DE 102010000849
(43) Veröffentlichungstag der Anmeldung: 21.11.2012
(73) Patentinhaber: Siemens Aktiengesellschaft, 80333 München (DE)
(72) Erfinder: BALINT, Thomas, 76831 Billigheim (DE); BAUER, Jörg, 91080 Uttenreuth (DE); KISSLING, Jan, 76676 Graben-Neudorf (DE)
(86) Internationale Anmeldenummer: PCT/EP2011/050307
(87) Internationale Veröffentlichungsnummer: WO 2011/086083

(56) Entgegenhaltungen:
- US-B1- 7 389 534
- JOSÃ Â CR LOPEZ ET AL: "Secure M2M communication with JMC Conciliatorâ", RESEARCH DISCLOSURE, MASON PUBLICATIONS, HAMPSHIRE, GB, Bd. 547, Nr. 29, 1. November 2009 (2009-11-01), Seite 1153, XP007139447, ISSN: 0374-4353
- ZEZULKA F ET AL: "Virtual automation networks - architectural principles and the current state of development", INDUSTRIAL ELECTRONICS, 2008. IECON 2008. 34TH ANNUAL CONFERENCE OF IEEE, IEEE, PISCATAWAY, NJ, USA, 10. November 2008 (2008-11-10), Seiten 1545-1550, XP031410670, ISBN: 978-1-4244-1767-4

## Beschreibung

Die Erfindung betrifft ein Verfahren zur Bedienung, Beobachtung und/oder Konfiguration eines Automatisierungssystems einer technischen Anlage gemäß Oberbegriff des Patentanspruchs 1. Die Erfindung betrifft ferner eine Steuersoftware zur Durchführung dieses Verfahrens gemäß Patentanspruch 8 und ein Computerprogrammprodukt mit einer derartigen Steuersoftware gemäß Patentanspruch 10.

Für die Bedienung, Beobachtung und/oder Konfiguration eines Automatisierungssystems einer technischen Anlage, z.B. einer industriellen Produktionsanlage, einem Kraftwerk, einer Stückgutbeförder- und verteilanlage oder der Gebäudetechnik in einem großen Gebäude, sind bereits verschiedenste Softwarelösungen bekannt.

J. Lopez et al: "Secure M2M communication with JMC conciliator", Research Disclosure, Kenneth Mason Publications, Hampshire, GB, Bd. 547, Nr. 29, S. 1153, 1. November 2009 offenbart ein System und ein Verfahren zur Verbindung eines Client mit einem entfernten Host. Dabei werden Daten verschlüsselt über eine demilitarisierte Zone übertragen.

Beispiele für sehr bekannte Softwarelösungen sind die von der Anmelderin unter der Bezeichnung "WinCC" vertriebene Bedien- und Beobachtungssoftware und die unter der Bezeichnung "Step 7" vertriebene Projektierungs- bzw. Konfigurationssoftware. Diese auf einem PC ablauffähigen Softwarelösungen sind beispielsweise auf einer Engineering-Station (d.h. einer PC-Station zur Projektierung des Automatisierungssystems) installiert, die an ein nichtöffentliches internes Datennetzwerk (z.B. ein Industrial Ethernet) der Anlage angeschlossen ist, mit dem auch das Automatisierungssystem der technischen Anlage verbunden ist. Die Engineering-Station weist dabei zur Kommunikation mit dem Netzwerk eine erste Netzwerkadresse aufweist, die von der Bedien- und Beobachtungssoftware und/oder der Konfigurationssoftware zum Datenversand an das Automatisierungssystems über das Netzwerk adressierbar ist. Durch die Integrität des Netzes und den beschränkten Mitarbeiterkreis, der Zugriff auf das Netz hat, wird eine hohe IT-Sicherheit (IT-Security) und Betriebssicherheit (Safety) gewährleistet.

Mit Hilfe dieser Softwarelösungen können auch Ferndienstleistungen wie z.B. Fernunterstützung (Remote Support), Fernsteuerung (Remote Control) sowie vorbeugende Fernwartung (Remote Preventive Maintenance) für das Automatisierungssystem und die davon gesteuerte Anlage über ein an sich öffentliches und damit unsicheres Netzwerk wie z.B. das Internet durchgeführt werden. Die Einrichtung zur Bedienung, Beobachtung und/oder Konfiguration des Automatisierungssystems befindet sich dann entfernt von der Anlage. Bei einem Fernzugriff auf das Automatisierungssystems der Anlage müssen jedoch die IT-Sicherheit und die Betriebssicherheit der Anlage gewährleistet sein.

Bei einer ersten bekannten Möglichkeit ist die Bedien- und Beobachtungssoftware und/oder die Konfigurationssoftware auf der entfernten Einrichtung installiert und die Fernverbindung zum Automatisierungssystem wird mit dedizierten Modem-Verbindungen und Layer-2 Bridging-Verbindungen realisiert. Diese Lösung ist gemessen an den heutigen Anforderungen an IT-Sicherheit und Betriebssicherheit nicht mehr Stand der Technik, insbesondere im industriellen Umfeld.

Eine weitere Möglichkeit besteht darin, dass die Bedien- und Beobachtungssoftware und/oder die Konfigurationssoftware auf einer PC-Station in der Anlage, beispielsweise einer Engineering-Station, installiert ist, die sich im gleichen anlageninternen nichtöffentlichen Datennetzwerk befindet wie das Automatisierungssystem, und dass die von der Anlage entfernte Einrichtung mittels einer Terminal Session die PC-Station und die darauf installierte Software fernsteuert. Die entfernte Einrichtung ist dabei über das öffentliche Netzwerk mittels einer verschlüsselte Punkt-zu-Punkt-Verbindung (z.B. einen VPN-Tunnel) mit der PC-Station verbunden. Die Sicherheit bei dieser Methode wird durch die Integrität des nichtöffentlichen anlageninternen Datennetzwerkes und die verschlüsselte Punkt-zu-Punkt-Verbindung gewährleistet. Allerdings ist dies oftmals mit Mehrkosten für Terminal-Session-Programme verbunden. Außerdem sind nicht in allen Bereichen eines Automatisierungssystems PCs vorhanden.

Um flexibel von unterschiedlichen von einer Anlage entfernten Orten temporär sichere Verbindungen über ein öffentliches Netzwerk wie das Internet zu einem Automatisierungssystem einer technischen Anlage herzustellen, sind bereits zentrale und sichere Kommunikationsplattformen wie z.B. eine Plattform mit der Bezeiczhnung "cRSP" (Common Remote Service Platform) der Anmelderin bekannt. Im Unterschied zu einfachen Punkt-zu-Punkt-Verbindungen ist es mittels einer solchen Plattform von jedem Internet-Anschluss aus möglich, eine sichere Verbindung mit einem Automatisierungssystem aufzubauen.

Ausgehend hiervon ist es Aufgabe vorliegender Erfindung, für eine von einer Anlage entfernte Einrichtung gemäß Oberbegriff des Anspruchs 1 ein sicheres Verfahren zur Bedienung, Beobachtung und/oder Konfiguration des Automatisierungssystems einer technischen Anlage über ein öffentliches und damit nichtsicheres Netzwerk zu schaffen. Außerdem ist es Aufgabe vorliegender Erfindung, eine Steuersoftware zur Durchführung eines derartigen Verfahrens sowie ein Computerprogrammprodukt mit einer derartigen Software anzugeben.

Die auf das Verfahren gerichtete Aufgabe wird durch ein Verfahren gemäß Patentanspruch 1 gelöst. Dieses Verfahren sieht zumindest die folgenden Schritte vor:
a) eine Steuersoftware stellt sicher, dass die für eine Kommunikation durch das öffentliche Netzwerk relevanten Softwareprozesse der Bedien- und Beobachtungssoftware und/oder der Konfigurationssoftware beendet sind,
b) die entfernte Einrichtung baut eine sichere Kommunikationsverbindung von einem ersten Endpunkt in der Einrichtung über das öffentliche Netzwerk zu einem zweiten Endpunkt in dem Automatisierungssystem auf,
c) in der entfernten Einrichtung wird dem ersten Endpunkt eine zweite Netzwerk-Adresse zugeordnet, wobei die zweite Netzwerkadresse unterschiedlich zu der ersten Netzwerkadresse ist,
d) die für eine Kommunikation durch das öffentliche Netzwerk relevanten Softwareprozesse der Bedien- und Beobachtungssoftware und/oder der Konfigurationssoftware werden gestartet,
e) die Bedien- und Beobachtungssoftware und/oder die Konfigurationssoftware versendet (versenden) Datenpakete zum Bedienen, Beobachten und/oder zur Konfiguration des Automatisierungssystems an die erste Netzwerkadresse,
f) die Steuersoftware leitet die an die erste Netzwerkadresse gesendeten Datenpakete an die zweite Netzwerkadresse um.

Der Erfindung liegt hierbei zum einen die Erkenntnis zugrunde, dass von handelsüblicher Bedien- und Beobachtungssoftware und/oder Konfigurationssoftware oftmals Datenbereiche in den versandten Datenpaketen (im Zusammenhang mit dem TCP-Protokoll als "Ports" bezeichnet) gesperrt werden, die jedoch für eine sichere Verbindung über ein öffentliches Netzwerk, insbesondere über eine sichere Kommunikationsplattform, benötigt werden. Indem durch die Steuersoftware in einem ersten Schritt sichergestellt wird, dass die für eine Kommunikation durch das nichtsichere Netzwerk relevanten Prozesse der Bedien- und Beobachtungssoftware und/oder der Konfigurationssoftware beendet sind, sind diese Datenbereiche (Ports) freigegeben. Zu diesen freien Datenbereichen (Ports) kann dann eine sichere Kommunikationsverbindung, vorzugsweise über eine sichere Kommunikationsplattform, hergestellt werden. Erst danach werden, vorzugsweise ebenfalls durch die Steuersoftware, die für eine Kommunikation durch das öffentliche Netzwerk relevanten Softwareprozesse der Bedien- und Beobachtungssoftware und/oder der Konfigurationssoftware gestartet. Dies kann auch den Start der gesamten Bedien- und Beobachtungssoftware und/oder der gesamten Konfigurationssoftware umfassen. Allerdings ist eine nach Verbindungsherstellung in der entfernten Einrichtung für den ersten Endpunkt erzeugte zweite Netzwerk-Adresse, im Fall des Internets vorzugsweise eine sogenannte "Loopback-IP-Adresse", unterschiedlich zu der ersten Netzwerkadresse und somit oftmals für die Bedien- und Beobachtungssoftware und/oder die Konfigurationssoftware nicht zum Datenversand an das Automatisierungssystems über das öffentliche Netzwerk adressierbar. Von der Bedien- und Beobachtungssoftware und/oder der Konfigurationssoftware an die erste Netzwerkadresse versendete Datenpakete zum Bedienen, Beobachten und/oder zur Konfiguration des Automatisierungssystems werden deshalb von der Steuersoftware an die zweite Netzwerkadresse und somit in die sichere Kommunikationsverbindung zu dem Automatisierungssystem umgeleitet. Die Steuersoftware steuert somit sowohl die Belegung der Datenbereiche (Ports) in den von der Bedien- und Beobachtungssoftware und/oder der Konfigurationssoftware erzeugten Datenpaketen als auch den Weg dieser Datenpakete in die sichere Kommunikationsverbindung. Hierdurch ist eine sichere Bedienung, Beobachtung und/oder Konfiguration eines Automatisierungssystems über ein öffentliches Netzwerk möglich.

Üblicherweise enthalten die durch die Bedien- und Beobachtungssoftware und/oder die Konfigurationssoftware versandten Datenpakete zur Identifizierung des Adressaten die erste Netzwerkadresse. Die Umleitung der Datenpakete durch die Steuersoftware kann dann dadurch besonders einfach erfolgen, dass die Steuersoftware in den Datenpaketen die erste Netzwerkadresse durch die zweite Netzwerkadresse ersetzt.

Wenn die Bedien- und Beobachtungssoftware und/oder die Konfigurationssoftware vor dem Aufbau der sicheren Verbindung bereits gestartet ist (sind), so werden bevorzugt durch die Steuersoftware im Schritt a) die für eine Kommunikation durch das nichtsichere Netzwerk relevanten Softwareprozesse der Bedien- und Beobachtungssoftware und/oder der Konfigurationssoftware beendet.

Gemäß einer besonders vorteilhaften Ausgestaltung verläuft die sichere Kommunikationsverbindung dabei über eine sichere Kommunikationsplattform, die mit dem öffentlichen Netzwerk verbunden ist. Hierdurch kann von jedem Anschluss des Netzwerkes eine sichere Verbindung in die Anlage aufgebaut werden.

Zur weiteren Erhöhung der Sicherheit erfolgt auf der sicheren Kommunikationsplattform von Vorteil eine Datenspiegelung.

Bevorzugt handelt es sich bei der sicheren Kommunikationsverbindung um eine Tunnelverbindung, d.h. um eine Verbindung, bei der eine Identifizierung und Authentifizierung der Kommunikationspartner erfolgt und bei der durch Datenverschlüsselung die Vertraulichkeit der Daten (d.h. es ist kein Zugang auf die Daten für Dritte) sowie die Integrität der Daten (d.h. es ist keine Veränderung der Daten durch Dritte möglich) gewährleistet ist. Eine derartige Tunnelverbindung ist beispielsweise über das Internet durch eine VPN (Virtual Private Network)-Verbindung möglich, die ein Internet-Sicherheitsprotokoll wie z.B. IPsec (Internet Protocol Security) nutzt.

Die Aufgabe wird weiter gelöst durch eine Steuersoftware gemäß Patentanspruch 9 und ein Computerprogrammprodukt mit einer derartigen Steuersoftware gemäß Patentanspruch 10.

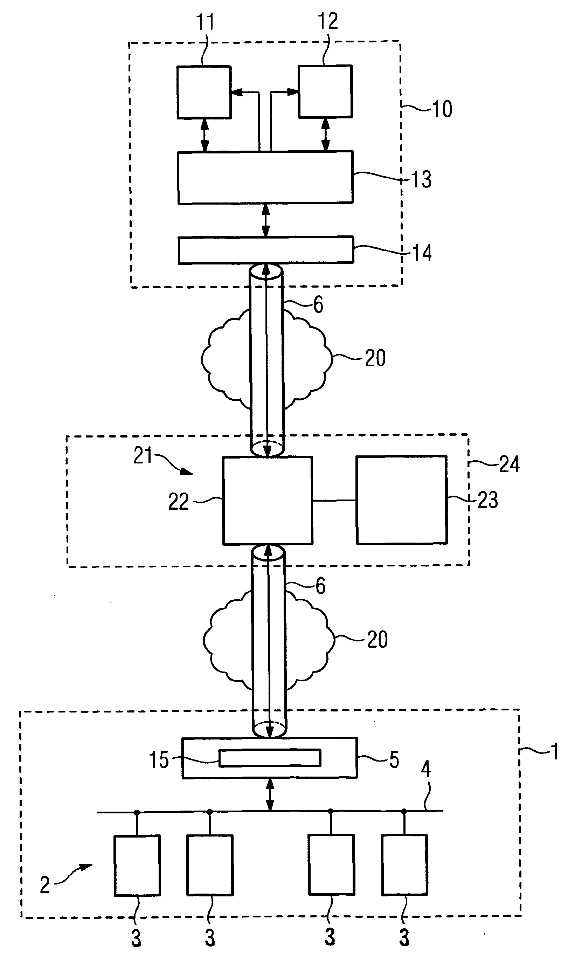

Die Erfindung sowie vorteilhafte Ausgestaltungen der Erfindung werden im Folgenden anhand eines Ausführungsbeispieles in der Figur näher erläutert. Diese zeigt eine technische Anlage 1 (z.B. eine industriellen Produktionsanlage, ein Kraftwerk, einer Stückgutbeförder- und verteilanlage oder die Gebäudetechnik in einem großen Gebäude) mit einem Automatisierungssystem 2 für diese Anlage. Das Automatisierungssystem 2 umfasst beispielsweise mehrere Automatisierungsgeräte 3, die über ein anlageninternes, d.h. ein nichtöffentliches, Netzwerk 4 miteinander und mit einem Zugangs-Router 5 im Datenaustausch stehen.

Eine von der Anlage 1 entfernte Einrichtung 10, beispielsweise eine Engineering-Station, weist eine Bedien- und Beobachtungssoftware 11 zur Bedienung und Beobachtung des Automatisierungssystems 2, eine Konfigurationssoftware 12, beispielweise als Bestandteil einer Projektierungssoftware, für das Automatisierungssystems und eine erfindungsgemäße Steuersoftware 13 auf. Mittels der Bedien- und Beobachtungssoftware 11 ist beispielsweise eine Fernbeobachtung, Ferndiagnose, Fernsteuerung oder vorbeugende Fernwartung möglich. Mittels der Konfigurationssoftware 12 können beispielsweise Änderungen an der Software der Automatisierungsgeräte 3 (z.B. Parameteränderungen, funktionale Änderungen, Änderungen in der Datenkommunikation zwischen den Automatisierungsgeräte 3) durchgeführt werden.

Die Einrichtung 10 greift hierzu über das Internet 20, d.h. ein öffentliches Netzwerk, und einen anlageninternen Zugangs-Router 5 auf das Automatisierungssystem 3 zu. Die Einrichtung 10 weist zur Kommunikation mit dem Internet 20 eine erste IP-Adresse auf, die durch die Bedien- und Beobachtungssoftware 11 und/oder die Konfigurationssoftware 12 zum Datenversand über das Internet 20 an das Automatisierungssystem 3 adressierbar ist.

Wünscht ein Bediener der Einrichtung 10 eine Bedienung, Beobachtung und/oder Konfiguration des Automatisierungssystems 2, so startet er zunächst - beispielsweise über einen Browser - die Steuersoftware 13. Von der Steuersoftware 13 wird in einem ersten Schritt sichergestellt, dass die für eine Kommunikation durch das Internet 20 relevanten Softwareprozesse der Bedien- und Beobachtungssoftware 11 und/oder der Konfigurationssoftware 12 beendet sind. Sofern diese Prozesse bereits gestartet sind, werden diese durch die Steuersoftware 20 beendet. Alternativ können von der Steuersoftware statt einzelner Prozesse auch gleich die gesamte Bedien- und Beobachtungssoftware 11 und/oder Konfigurationssoftware 12 beendet werden.

Anschließend wird in einem zweiten Schritt durch die Steuersoftware 20 eine sichere Kommunikationsverbindung 6 in Form einer Tunnelverbindung von der Einrichtung 10 über das Internet 20 zu dem Automatisierungssystem 3 aufgebaut. Die Tunnelverbindung verläuft dabei über eine sichere Kommunikationsplattform 21, z.B. die Plattform mit der Bezeichnung "cRSP" (Common Remote Service Platform) der Anmelderin.

Zur Sicherstellung der Vertraulichkeit, Authentizität und Integrität der Kommunikation über die Kommunikationsverbindung 6 wird bevorzugt das IPSec-Protokoll eingesetzt. Es befindet sich somit ein IPSec-Endpunkt 14 in der Einrichtung 10 und ein IPSec-Endpunkt 15 auf Seite der Anlage 1 in dem Zugangs-router 5. Zum Austausch von Schlüsselinformationen kann das Internet Security Association and Key Management Protocol (ISAKMP) eingesetzt werden.

Die sichere Kommunikationsplattform 21 umfasst eine Zugangs-Server 22 und einen Datenserver 23. Sie befindet sich in einer demilitarisierten Zone 24. Die Kommunikationsverbindung 6 ist dabei in der sicheren Kommunikationsplattform 21 nicht "durchgeschaltet", sondern in dem Zugangsserver 22 durch eine "Reverse-Proxy"-Funktionalität unterbrochen. Eine aus der Anlage 1 über den Zugangs-Router 5 oder von der Einrichtung 10 aufgebaute Verbindung wird im Zugangs-Server 22 terminiert. Die dabei übertragenen Daten werden im Daten-Server 23 abgespeichert. Der Zugangs-Server 22 baut dann die weitere Verbindung zur Einrichtung 10 bzw. zur Anlage 1 auf und überträgt darüber die in dem Daten-Server 23 gespeicherten Daten.

In der sicheren Kommunikationsplattform 21 wird somit die ankommende Kommunikation "gespiegelt". Die genannte Spiegelung und der Verbindungsaufbau zur Anlage 1 bzw. zur Einrichtung 10 erfolgt ausschließlich nach erfolgreicher Authentifizierung und Authorisierung am Zugangs-Router 5, wobei die dafür benötigten Verbindungsinformationen und Passwörter gesichert übertragen werden.

Diese Architektur bietet einen zuverlässigen Schutz vor nicht-autorisierten Zugriffen von einer Einrichtung 10 in die Anlage 1 und umgekehrt, vor Zugriffen aus dem Internet 20, Übertragung von Viren und ähnlichen Schadens-Programmen von der Einrichtung 10 in die Anlage 1 und umgekehrt, sowie vor Mißbrauch von vertraulichen Zugangsdaten.

Der Zugangs-Router 5 überprüft die Autorisierung des Ferndienstleistungsanbieters für einen Zugriff auf die Anlage 1. Im Fall einer Autorisierung übergibt er der Einrichtung 10 ein temporäres Passwort für den Zugang zum Zugangs-Server 22. Die Einrichtung 10 leitet Zugangsdaten und das temporäre Passwort zu dem Zugangs-Server 22. Die Einrichtung 10 beantragt beim Zugangs-Server 22 Zugang zu der Anlage 1 durch Angabe ihres Passworts. Der Zugangs-Server 22 vergleicht das Passwort mit dem von dem Zugangs-Router 5 erhaltenen Passwort und stellt im Fall einer Übereinstimmung die Kommunikationsverbindung 6 in die Anlage 1 her.

Durch die in dem ersten Schritt erfolgte Beendigung der für die Kommunikation durch das Internet 20 relevanten Softwareprozesse der Bedien- und Beobachtungssoftware 11 und/oder der Konfigurationssoftware 12 ist sichergestellt, dass diese keine Ports belegen, die für die Kommunikation über die sichere Kommunikationsplattform 21 benötigt werden.

In der Einrichtung 10 wird dem ersten IPSec-Endpunkt 14 nun eine zweite IP-Adresse, vorzugsweise eine Loopback-IP-Adresse, zugeordnet, wobei die zweite IP-Adresse unterschiedlich zu der ersten IP-Adresse ist. Dies geschieht beispielsweise durch einen Browser, über den der Bediener die Steuersoftware 13 gestartet und somit die sichere Kommunikationsverbindung 6 aufgebaut hat. Der Browser sucht nach einer freien Loopback-IP-Adresse und ordnet diese dem ersten IPSec-Endpunkt 14 zu.

In einem vierten Schritt werden entweder händisch durch den Bediener oder automatisch durch die Steuersoftware 13 die für eine Kommunikation durch das Internet 20 relevanten Softwareprozesse der Bedien- und Beobachtungssoftware 11 und/oder der Konfigurationssoftware 12 gestartet. Diese Prozesse erhalten dabei jedoch keine exklusiven Rechte für die für die Kommunikation über die sichere Kommunikationsplattform 21 benötigten Ports.

Ab nun können in einem fünften Schritt die Bedien- und Beobachtungssoftware 11 und/oder die Konfigurationssoftware 12 Datenpakete zum Bedienen, Beobachten und/oder zur Konfiguration des Automatisierungssystems 3 an die erste IP-Adresse versenden. Die Datenpakete enthalten zur Adressierung diese erste IP-Adresse. Ein Versand der Datenpakete direkt an die zweite IP-Adresse ist für die Bedien- und Beobachtungssoftware 11 und/oder eine Konfigurationssoftware 12 eines Automatisierungssystems oftmals nicht möglich, da diese meist nicht mit einer Loopback-IP-Adresse kommunizieren können. Die Steuersoftware 13 leitet deshalb die an die erste IP-Adresse gesendeten Datenpakete an die zweite IP-Adresse um, in dem sie in den Datenpaketen die erste IP-Adresse durch die zweite IP-Adresse ersetzt. Die Datenpakete werden somit in die sichere Kommunikationsverbindung 6 geleitet. Hierdurch ist eine sichere Bedienung, Beobachtung und/oder Konfiguration des Automatisierungssystems 3 über das Internet 20 möglich.

## Patentansprüche

1. Verfahren zur Bedienung, Beobachtung und/oder Konfiguration eines Automatisierungssystems (3) einer technischen Anlage (1) von einer von der technischen Anlage entfernten Einrichtung (10) über eine sichere Kommunikationsverbindung durch ein öffentliches Netzwerk (20), insbesondere das Internet, wobei die entfernte Einrichtung (10) eine Bedien- und Beobachtungssoftware (11) und/oder eine Konfigurationssoftware (12) für das Automatisierungssystem (3) aufweist und zur Kommunikation mit dem öffentlichen Netzwerk (20) eine erste Netzwerkadresse aufweist, und wobei durch die Bedien- und Beobachtungssoftware (11) und/oder die Konfigurationssoftware (12) zum Datenversand über das öffentliche Netzwerk (20) an das Automatisierungssystem (3) die erste Netzwerkadresse adressierbar ist,
**gekennzeichnet durch** zumindest die folgenden Schritte:
a) eine Steuersoftware (13) beendet die für eine Kommunikation **durch** das Internet laufenden Softwareprozesse der Bedien- und Beobachtungssoftware (11) und/oder Konfigurationssoftware (12),
b) die entfernte Einrichtung (10) baut eine sichere Kommunikationsverbindung von einem ersten Endpunkt (14) in der Einrichtung über das öffentliche Netzwerk (20) zu einem zweiten Endpunkt (15) in dem Automatisierungssystem (3) auf,
c) in der entfernten Einrichtung (10) wird dem ersten Endpunkt (14) eine zweite Netzwerk-Adresse () zugeordnet, wobei die zweite Netzwerkadresse unterschiedlich zu der ersten Netzwerkadresse ist,
d) die für eine Kommunikation **durch** das öffentliche Netzwerk (20) relevanten Softwareprozesse der Bedien- und Beobachtungssoftware (11) und/oder der Konfigurationssoftware (12) werden gestartet,
e) die Bedien- und Beobachtungssoftware (11) und/oder die Konfigurationssoftware (12) versendet bzw. versenden Datenpakete zum Bedienen, Beobachten und/oder zur Konfiguration des Automatisierungssystems (3) an die erste Netzwerkadresse,
f) die Steuersoftware (13) leitet die an die erste Netzwerk-adresse gesendeten Datenpakete an die zweite Netzwerkadresse um.

2. Verfahren nach Anspruch 1,
**dadurch gekennzeichnet, dass** die durch die Bedien- und Beobachtungssoftware (11) und/oder die Konfigurationssoftware (12) erzeugten Datenpakete zur Identifizierung des Adressaten die erste Netzwerkadresse enthalten, und dass zum Umleiten der Datenpakete im Schritt f) in den Datenpaketen die erste Netzwerkadresse durch die zweite Netzwerkadresse ersetzt wird.

3. Verfahren nach einem der vorhergehenden Ansprüche,
**dadurch gekennzeichnet, dass** das öffentliche Netzwerk (20) das Internet ist und dass die Netzwerkadressen IP-Adressen sind.

4. Verfahren nach Anspruch 3,
**dadurch gekennzeichnet, dass** die zweite Netzwerkadresse eine Loopback-IP-Adresse der Einrichtung (10) ist.

5. Verfahren nach einem der vorhergehenden Ansprüche,
**dadurch gekennzeichnet, dass** die sichere Kommunikationsverbindung (6) über eine sichere Kommunikationsplattform (21) verläuft, die mit dem öffentlichen Netzwerk (20) verbunden ist.

6. Verfahren nach Anspruch 5,
**dadurch gekennzeichnet, dass** auf der sicheren Kommunikationsplattform (21) eine Datenspiegelung erfolgt.

7. Verfahren nach einem der vorhergehenden Ansprüche,
**dadurch gekennzeichnet, dass** die sichere Kommunikationsverbindung (6) eine Tunnelverbindung ist.

8. Steuersoftware (13) zur Durchführung des Verfahrens nach einem der vorhergehenden Ansprüche, **dadurch gekennzeichnet, dass** sie bei Ablauf auf einem Rechner die Schritte a) und f) durchführt.

9. Steuersoftware (13) nach Anspruch 8,
**dadurch gekennzeichnet, dass** sie bei Ablauf auf einem Rechner zusätzlich zu den Schritten a) und f) auch noch die Schritte b) und/oder d) durchführt.

10. Computerprogrammprodukt, auf dem eine Steuersoftware (13) nach Anspruch 8 oder 9 gespeichert ist.

## Claims

1. Method for operating, monitoring and/or configuring an automation system (3) of a technical plant (1) by a facility (10) remote from the technical plant by way of a secure communication link through a public network (20), in particular the Internet, wherein the remote facility (10) comprises an operating and monitoring software (11) and/or a configuration software (12) for the automation system (3) and comprises a first network address for communication with the public network (20), and wherein the first network address can be addressed by means of the operating and monitoring software (11) and/or the configuration software (12) in order to send data via the public network (20) to the automation system (3),
**characterised by** at least the follow steps:
a) a control software (13) terminates the software processes of the operating and monitoring software (11) and/or configuration software (12) running for communication via the Internet,
b) the remote facility (10) establishes a secure communication link from one first terminal point (14) in the facility via the public network (20) to a second terminal point (15) in the automation system (3),
c) in the remote facility (10), a second network address () is assigned to the first terminal point (14), wherein the second network address is different to the first network address,
d) the software processes of the operating and monitoring software (11) and/or the configuration software (12) which are relevant to a communication through the public network (20) are started,
e) the operating and monitoring software (11) and/or the configuration software (12) send/s data packets for operating, monitoring and/or configuration of the automation system (3) to the first network address,
f) the control software (13) routes the data packets sent to the first network address to the second network address.

2. Method according to claim 1,
**characterised in that** the data packets generated by means of the operating and monitoring software (11) and/or the configuration software (12) for identifying the addressees contain the first network address and in order to redirect the data packets in step f) into the data packets, the first network address is replaced by the second network address.

3. Method according to one of the preceding claims,
**characterised in that** the public network (20) is the Internet and the network addresses are IP addresses.

4. Method according to claim 3,
**characterised in that** the second network address is a Loopback IP address of the facility (10).

5. Method according to one of the preceding claims,
**characterised in that** the secure communication link (6) runs over a secure communication platform (21) which is connected to the public network (20).

6. Method according to claim 5,
**characterised in that** a data mirroring occurs on the secure communication platform (21).

7. Method according to one of the preceding claims,
**characterised in that**
the secure communication link (6) is a tunnel link.

8. Control software (13) for implementing the method according to one of the preceding claims, **characterised in that** when running on a computer, it implements the steps a) and f).

9. Control software (13) according to claim 8,
**characterised in that** when running on a computer, it also still executes steps b) and/or d) in addition to steps a) and f).

10. Computer program product on which a control software (13) according to claim 8 or 9 is stored.

## Revendications

1. Procédé de service, d'observation et/ou de configuration d'un système ( 3 ) d'automatisation d'une installation ( 1 ) technique par un dispositif ( 10 ) éloigné de l'installation technique par l'intermédiaire d'une liaison de communication sécurisée par un réseau ( 20 ) public, notamment l'internet, le dispositif ( 10 ) éloigné ayant un logiciel ( 11 ) de service et d'observation et/ou un logiciel ( 12 ) de configuration du système ( 3 ) d'automatisation et ayant une première adresse de réseau pour la communication avec le réseau ( 20 ) public, et dans lequel la première adresse du réseau peut être adressée par le logiciel ( 11 ) de service et d'observation et/ou par le logiciel ( 12 ) de configuration pour l'envoi de données par l'intermédiaire du réseau ( 20 ) public au système ( 3 ) d'automatisation,
**caractérisé par** au moins les stades suivante
a) un logiciel ( 13 ) de commande met fin aux opérations logicielles, se déroulant pour une communication par l'internet, du logiciel ( 11 ) de service et d'observation et/ou du logiciel ( 12 ) de configuration,
b) le dispositif ( 10 ) éloigné établit une liaison de communication sécurisée par l'intermédiaire du réseau ( 20 ) public d'un premier point ( 14 ) d'extrémité dans le dispositif à un deuxième point ( 15 ) d'extrémité dans le système ( 3 ) d'automatisation,
c) dans le dispositif ( 10 ) éloigné, une deuxième adresse de réseau est affectée au premier point ( 14 ) d'extrémité, la deuxième adresse de réseau étant différente de la première adresse de réseau,
d) on fait débuter les opérations logicielles pertinentes pour une communication par le réseau public du logiciel ( 11 ) de service et d'observation et/ou du logiciel ( 12 ) de configuration,
e) le logiciel ( 11 ) de service et d'observation et/ou le logiciel ( 12 ) de configuration envoie ou envoient des paquets de données pour le service, l'observation et/ou la configuration du système ( 3 ) d'automatisation à la première adresse de réseau,
f) le logiciel ( 13 ) de commande redirige les paquets de données envoyés à la première adresse de réseau vers la deuxième adresse de réseau.

2. Procédé suivant la revendication 1,
**caractérisé en ce que** les paquets de données produits par le logiciel ( 11 ) de service et d'observation et/ou par le logiciel ( 12 ) de configuration contiennent, pour l'identification de l'adressé, la première adresse de réseau et **en ce que**, pour rediriger les paquets de données au stade f), la première adresse de réseau est remplacée par la deuxième adresse de réseau dans les paquets de données.

3. Procédé suivant l'une des revendications précédentes,
**caractérisé en ce que** le réseau ( 20 ) public est l'internet et **en ce que** les adresses de réseau sont des adresses IP.

4. Procédé suivant la revendication 3,
**caractérisé en ce que** la deuxième adresse de réseau est une adresse loopback-IP du dispositif ( 10 ).

5. Procédé suivant l'une des revendications précédentes,
**caractérisé en ce que** la liaison ( 6 ) sécurisée de communication se déroule par l'intermédiaire d'une plateforme ( 21 ) sécurisée de communication, qui est reliée au réseau ( 20 ) public.

6. Procédé suivant la revendication 5,
**caractérisé en ce qu'**une réflexion de données a lieu sur la plateforme ( 21 ) sécurisée de communication.

7. Procédé suivant l'une des revendications précédentes,
**caractérisé en ce que** la liaison ( 6 ) sécurisée de communication est une liaison tunnel.

8. Logiciel ( 13 ) de commande pour effectuer le procédé suivant l'une des revendications précédentes, **caractérisé en ce qu'**il effectue les stades a) et f), lorsqu'il se déroule sur un ordinateur.

9. Logiciel ( 13 ) de commande suivant la revendication 8,
**caractérisé en ce qu'**il effectue aussi les stades b) et/ou d), lorsqu'il se déroule sur un ordinateur, en plus des stades a) et f ) .

10. Produit de programme d'ordinateur, sur lequel est mémorisé un logiciel ( 13 ) de commande suivant la revendication 8 ou 9.
